(19) Europäisches Patentamt
European Patent Office
Office européen des brevets

(11) EP 4 006 075 A1

# (12) EUROPEAN PATENT APPLICATION
published in accordance with Art. 153(4) EPC

(43) Date of publication:
01.06.2022 Bulletin 2022/22

(21) Application number: 20865529.0

(22) Date of filing: 03.09.2020

(51) International Patent Classification (IPC):
$C08G\ 18/30^{(2006.01)}$     $B32B\ 27/40^{(2006.01)}$
$C08G\ 18/10^{(2006.01)}$     $C08G\ 18/42^{(2006.01)}$
$C09J\ 175/06^{(2006.01)}$

(52) Cooperative Patent Classification (CPC):
B32B 27/40; C08G 18/10; C08G 18/30;
C08G 18/42; C09J 175/06

(86) International application number:
PCT/JP2020/033356

(87) International publication number:
WO 2021/054129 (25.03.2021 Gazette 2021/12)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 20.09.2019 JP 2019171611

(71) Applicant: DIC Corporation
Tokyo 174-8520 (JP)

(72) Inventor: KOMATSUZAKI, Kunihiko
Takaishi-shi, Osaka 592-0001 (JP)

(74) Representative: Beckmann, Claus
Kraus & Weisert
Patentanwälte PartGmbB
Thomas-Wimmer-Ring 15
80539 München (DE)

## (54) MOISTURE-CURABLE POLYURETHANE RESIN COMPOSITION, ADHESIVE, AND LAMINATE

(57) An object of the invention is to provide a moisture-curable polyurethane resin composition containing a biomass raw material and having excellent adhesiveness to a fabric (particularly, a water-repellent fabric) and excellent film strength. The invention provides a moisture-curable polyurethane hot-melt resin composition containing: a urethane prepolymer (i) having an isocyanate group, which is a reaction product of a polyol (A) and a polyisocyanate (B), the polyol (A) containing a polyester polyol (a1)containing, as raw materials, a biomass-derived polybasic acid (x) and a biomass-derived glycol (y), and another polyester polyol (a2). In addition, the invention provides an adhesive containing the moisture-curable polyurethane hot-melt resin composition.

EP 4 006 075 A1

**Description**

TECHNICAL FIELD

The present invention relates to a moisture-curable polyurethane resin composition, an adhesive, and a laminate.

BACKGROUND ART

Moisture-permeable waterproof clothing having both moisture permeability and waterproofness is a structure in which a moisture-permeable film is bonded to a fabric via an adhesive. As the adhesive, a urethane-based adhesive is generally used from the viewpoint of good adhesion between the moisture-permeable film and the fabric. Among the urethane-based adhesives, the amount of a moisture-curable polyurethane resin composition, which is a solventless type, to be used is gradually increasing due to global solvent discharge regulation or residual solvent regulation recently (see, for example, PTL 1).

On the other hand, it has been pointed out that the fabric to be used has improved denier and water repellency due to high functionality, and the adhesiveness to the adhesive deteriorates accordingly. In the current moisture-curable polyurethane resin composition, there has not been found a moisture-curable polyurethane resin composition that exhibits particularly high adhesion to a super water-repellent fabric.

Further, as the ocean plastic problem is attracting attention recently, the degree of attention to bio-based resins aiming at elimination from stone resources is increasing day by day, and the moisture-curable polyurethane resin composition is not an exception.

CITATION LIST

PATENT LITERATURE

PTL 1: JP-A-2017-202608

SUMMARY OF INVENTION

TECHNICAL PROBLEM

An object of the invention is to provide a moisture-curable polyurethane resin composition containing a biomass raw material and having excellent adhesiveness to a fabric (particularly, a water-repellent fabric) and excellent film strength.

SOLUTION TO PROBLEM

The invention provides a moisture-curable polyurethane hot-melt resin composition containing: a urethane prepolymer (i) having an isocyanate group, which is a reaction product of a polyol (A) and a polyisocyanate (B), the polyol (A) containing a polyester polyol (a1) containing, as raw materials, a biomass-derived polybasic acid (x) and a biomass-derived glycol (y), and another polyester polyol (a2).

In addition, the invention provides an adhesive containing the moisture-curable polyurethane resin composition. Further, the invention provides a laminate containing at least a fabric (i) and a cured product of the moisture-curable polyurethane resin composition.

ADVANTAGEOUS EFFECTS OF INVENTION

The moisture-curable polyurethane hot-melt resin composition according to the invention contains a biomass raw material, and is an environment-friendly material. In addition, the moisture-curable polyurethane hot-melt resin composition according to the invention is excellent in adhesiveness to various fabrics, and also excellent in adhesiveness to a water-repellent fabric. Further, the moisture-curable polyurethane hot-melt resin composition can also have excellent film strength.

DESCRIPTION OF EMBODIMENTS

A moisture-curable polyurethane hot-melt resin composition used in the invention contains a urethane prepolymer (i) having an isocyanate group, which is a reaction product of a polyol (A) containing a specific polyester polyol and a polyisocyanate (B).

It is essential that the polyol (A) contains a polyester polyol (a1) containing a biomass-derived polybasic acid (x) and a biomass-derived glycol (y) as raw materials, and another polyester polyol (a2).

As the biomass-derived polybasic acid (x), sebacic acid, succinic acid, dimer acid, 2,5-furandicarboxylic acid, or the like can be used. These compounds may be used alone or in combination of two or more thereof.

As the sebacic acid, for example, those obtained by a known cleavage reaction of a vegetable oil such as castor oil with a caustic alkali can be used. As the succinic acid, for example, those obtained by fermenting corn, sugarcane, cassava, sago palm, or the like by a known method can be used. As the dimer acid, for example, those obtained by dimerization of an unsaturated fatty acid of a plant-derived natural fat fatty acid by a known method can be used. As the 2,5-furandicarboxylic acid, for example, those using fructose as a raw material, and those obtained by a known method using furancarboxylic acid, which is a furfural derivative, and carbon dioxide can be used.

Among those described above, as the biomass-derived polybasic acid (x), sebacic acid and/or succinic acid are preferable, and sebacic acid is more preferable, from the viewpoint of obtaining even more excellent adhesiveness to the fabric.

As the biomass-derived glycol (y), for example, ethylene glycol, 1,2-propanediol, 1,3-propanediol, 1,4-butanediol, 1,10-decane diol, dimerdiol, and isosorbide can be used. These compounds may be used alone or in combination of two or more thereof.

As the ethylene glycol, for example, those obtained from bioethanol obtained by a known method through ethylene can be used. As the 1,2-propanediol, for example, those obtained by fermentation of saccharides, and those obtained by high-temperature hydrogenation of glycerin produced as a by-product of biodiesel by a known method can be used. As the 1,3-propanediol, for example, those obtained by producing 3-hydroxypropionaldehyde from glycerol, glucose, and other saccharides by a known fermentation method, and then further converting to the 1,3-propanediol, and those directly obtained from glucose and other saccharides by a fermentation method can be used.

As the 1,4-butanediol, for example, those obtained from glucose by a known fermentation method, those obtained from 1,3-butadiene obtained by a fermentation method, and those obtained by hydrogenating succinic acid with a reduction catalyst can be used. As the 1,10-decanediol, for example, those obtained by hydrogenating sebacic acid directly or after an esterification reaction can be used. As the dimerdiol, for example, those obtained by reducing a dimer acid by a known method can be used. As the isosorbide, for example, those obtained by dehydration condensation of sorbitol obtained from starch by a known method can be used.

Among those described above, as the biomass-derived glycol (y), 1,3-propanediol and/or 1,4-butanediol are preferable, and 1,3-propanediol is more preferable, from the viewpoint of obtaining even more excellent adhesiveness to the fabric.

The polyester polyol (a1) contains the biomass-derived polybasic acid (x) and the biomass-derived glycol (y) as essential raw materials, and other polybasic acids and/or glycols may be used in combination in the range where an effect of the invention is not impaired.

The number average molecular weight of the polyester polyol (a1) is preferably in the range of 500 to 100,000, more preferably in the range of 700 to 50,000, and still more preferably in the range of 800 to 10,000, from the viewpoint of obtaining more excellent film strength and adhesiveness to the fabric. The number average molecular weight of the polyester polyol (a1) is a value measured by a gel permeation chromatography (GPC) method.

The use rate of the polyester polyol (a1) in the polyol (A) is preferably in the range of 20% by mass to 80% by mass, and more preferably in the range of 30% by mass to 70% by mass, from the viewpoint of obtaining more excellent film strength and adhesiveness to the fabric.

The another polyester polyol (a2) is particularly used for obtaining excellent film strength. Examples of the polyester polyol include crystalline polyester polyols and amorphous polyester polyols derived from petroleum resources. These polyester polyols may be used alone or in combination of two or more thereof. Among these, it is preferable to use an amorphous polyester polyol derived from a petroleum seismic source from the viewpoint of obtaining more excellent adhesiveness to the fabric, film strength, and film-forming property.

In the invention, the term "crystalline" means that a peak of heat of crystallization or heat of fusion can be observed in a differential scanning calorimetry (DSC) measurement in accordance with JIS K7121:2012, and the "amorphous" means that the peak cannot be observed.

As the amorphous polyester polyol, for example, a reaction product of a compound having two or more hydroxy groups and a polybasic acid can be used.

As the compound having two or more hydroxy groups, for example, ethylene glycol, diethylene glycol, propylene glycol, 1,3-butanediol, 1,4-butanediol, pentanediol, 2,4-diethyl-1,5-pentanediol, 3-methyl-1,5-pentanediol, hexanediol, neopentyl glycol, hexamethylene glycol, glycerin, trimethylolpropane, bisphenol A, bisphenol F, and alkylene oxide adducts thereof can be used. Among these, it is preferable to use a linear compound having two hydroxy groups and a branched compound having two or three hydroxy groups in combination from the viewpoint of obtaining more excellent adhesiveness to the fabric, film strength, and film-forming property.

As the polybasic acid, adipic acid, glutaric acid, pimelic acid, suberic acid, dimer acid, sebacic acid, undecanedicarboxylic acid, hexahydroterephthalic acid, phthalic acid, phthalic anhydride, isophthalic acid, and terephthalic acid can be used. Among these, it is preferable to use, as the polybasic acid, one or more compounds selected from the group consisting of phthalic acid, phthalic anhydride, isophthalic acid, and terephthalic acid, from the viewpoint of obtaining more excellent adhesiveness to the fabric, film strength, and film-forming property.

The number average molecular weight of the amorphous polyester polyol is preferably in the range of 500 to 50,000, and more preferably in the range of 700 to 10,000, from the viewpoint of obtaining more excellent adhesiveness to the fabric, film strength, and film-forming property.

The use rate of the amorphous polyester polyol in the polyol (A) is preferably in the range of 20% by mass to 80% by mass, and more preferably in the range of 30% by mass to 70% by mass, from the viewpoint of obtaining more excellent adhesiveness to the fabric, film strength, and film-forming property.

The polyol (A) contains the polyester polyols (a1) and (a2) as essential materials, but may contain other polyols as necessary. As the other polyols, polycarbonate polyol, polyether polyol, polybutadiene polyol, and polyacrylic polyol can be used. These polyols may be used alone or in combination of two or more thereof.

The number average molecular weight of the other polyols is, for example, in the range of 500 to 100,000. The number average molecular weight of the other polyols is a value measured by the gel permeation chromatography (GPC).

As the polyisocyanate (B), for example, aromatic polyisocyanates such as polymethylene polyphenyl polyisocyanate, diphenylmethane diisocyanate, carbodiimide-modified diphenylmethane diisocyanate, xylylene diisocyanate, phenylene diisocyanate, tolylene diisocyanate, and naphthalene diisocyanate, and aliphatic or alicyclic polyisocyanates such as hexamethylene diisocyanate, cyclohexane diisocyanate, isophorone diisocyanate, dicyclohexylmethane diisocyanate, and tetramethylxylylene diisocyanate can be used. These polyisocyanates may be used alone or in combination of two or more thereof. Among these, aromatic polyisocyanates are preferably used, and diphenylmethane diisocyanate is more preferable, from the viewpoint of obtaining more excellent reactivity and adhesiveness to the fabric.

The amount of the polyisocyanate (B) to be used is preferably in the range of 5% by mass to 40% by mass, and more preferably in the range of 10% by mass to 30% by mass, based on a total mass of raw materials constituting the urethane prepolymer (i).

The urethane prepolymer (i) is obtained by reacting the polyol (A) with the polyisocyanate (B), and has an isocyanate group that can react with moisture present in air or in a substrate to which the moisture-curable polyurethane hot-melt resin composition is applied to form a crosslinked structure.

As a method for producing the hot-melt urethane prepolymer (i), for example, the urethane prepolymer (i) can be produced by charging the polyisocyanate (B) to a reaction vessel containing the polyol (A), and reacting the isocyanate group of the polyisocyanate (B) with the hydroxy group of the polyol (A) under conditions where the isocyanate group is excessive with respect to the hydroxy group.

The equivalent ratio (isocyanate group/hydroxy group) of the isocyanate group of the polyisocyanate (B) to the hydroxy group of the polyol (A) in producing the urethane prepolymer (i) is preferably in the range of 1.1 to 5, and more preferably in the range of 1.5 to 3, from the viewpoint of obtaining more excellent adhesiveness to the fabric.

The isocyanate group content (hereinafter, abbreviated as "NCO%") in the urethane prepolymer (i) obtained by the above method is preferably in the range of 1.7 to 5, and more preferably in the range of 1.8 to 3, from the viewpoint of obtaining more excellent adhesiveness. The NCO% in the urethane prepolymer (i) is a value measured by a potentiometric titration method in accordance with JIS K1603-1:2007.

The moisture-curable polyurethane hot-melt resin composition used in the invention contains the urethane prepolymer (i) as an essential component, and may contain other additives as necessary.

As the other additives, for example, a light-resistant stabilizer, a curing catalyst, a tackifier, a plasticizer, a stabilizer, a filler, a dye, a pigment, a fluorescent whitening agent, a silane coupling agent, a wax, and a thermoplastic resin can be used. These additives may be used alone or in combination of two or more thereof.

The moisture-curable polyurethane resin composition according to the invention preferably has a biomass degree of 30% or more, and more preferably in the range of 40% to 60%. The biomass degree of the moisture-curable polyurethane hot-melt resin composition indicates a total weight ratio of biomass-derived materials used in producing the moisture-curable polyurethane hot-melt resin composition with respect to a total weight of the moisture-curable polyurethane hot-melt resin composition.

As described above, the moisture-curable polyurethane hot-melt resin composition according to the invention contains a biomass raw material, and is an environment-friendly material. The moisture-curable polyurethane hot-melt resin composition according to the invention is excellent in adhesiveness to various fabrics, and also excellent in adhesiveness to a water-repellent fabric. The moisture-curable polyurethane hot-melt resin composition can also have excellent film strength. Therefore, the moisture-curable polyurethane hot-melt resin composition according to the invention can be particularly suitably used as an adhesive for producing moisture-permeable waterproof clothing.

Next, a laminate according to the invention will be described.

The laminate according to the invention contains at least a fabric (i) and a cured product of the moisture-curable polyurethane hot-melt resin composition.

As the fabric (i), for example, a polyester fiber, fiber base materials such as a polyethylene fiber, a nylon fiber, an acrylic fiber, a polyurethane fiber, an acetate fiber, a rayon fiber, a polylactic acid fiber, cotton, linen, silk, wool, a glass fiber, a carbon fiber, and non-woven fabrics, woven fabrics, knitting made of blended fibers thereof, those obtained by impregnating the non-woven fabric with a resin such as a polyurethane resin, those obtained by providing the non-woven fabric further with a porous layer, and a resin base material can be used.

Also, in the invention, the fabric (i) exhibits excellent adhesiveness even when the fabric (i) is subjected to a water repellent treatment (hereinafter, abbreviated as "water-repellent fabric"). In the invention, "water repellency" of the water-repellent fabric means that the surface free energy obtained by the following calculation is 50 mJ/m$^2$ or less.

The contact angle of a measurement liquid (water and diiodomethane) on the fabric (i) was measured using a contact angle meter ("DM500" manufactured by Kyowa Interface Science Co., Ltd.). Based on this result, the surface free energy of the fabric (i) was calculated using the following formula (1).

$$(1 + \cos A) \cdot \gamma L/2 = (\gamma sd \cdot \gamma Ld)1/2 + (\gamma sp \cdot \gamma Lp)1/2$$

A: contact angle of measurement liquid on fabric (i)
$\gamma$L: surface tension of measurement liquid
yLd: dispersive force component of surface free energy of measurement liquid
$\gamma$Lp: polar force component of surface free energy of measurement liquid
ysd: dispersive force component of surface free energy of fabric (i)
ysp: polar force component of surface free energy of fabric (i)

Examples of the method for applying the moisture-curable polyurethane hot-melt resin composition include methods using a roll coater, a knife coater, a spray coater, a gravure roll coater, a comma coater, a T-die coater, an applicator, and a dispenser.

After applying the moisture-curable polyurethane hot-melt resin composition, the composition can be dried and cured by a known method.

The thickness of the cured product of the moisture-curable urethane hot-melt resin composition is, for example, in the range of 5 $\mu$m to 300 $\mu$m.

When the moisture-curable polyurethane hot-melt resin composition according to the invention is used as an adhesive for moisture-permeable waterproof clothing, it is preferable that the moisture-curable polyurethane hot-melt resin composition is intermittently applied by a gravure roll coater or a dispenser, and the fabric (i) and a known moisture-permeable film are bonded to each other. The thickness of the cured product of the moisture-curable polyurethane hot-melt resin composition in such a case is, for example, in the range of 5 $\mu$m to 50 $\mu$m.

Examples

Hereinafter, the invention will be described in more detail with reference to Examples.

[Example 1]

To a four-necked flask equipped with a thermometer, a stirrer, an inert gas inlet, and a reflux condenser, 40 parts by mass of a biomass polyester polyol (reaction product of sebacic acid ("sebacic acid" manufactured by HOKOKU CORPORATION) and 1,3-propanediol ("SUSTERRA propanediol" manufactured by DuPont), number average molecular weight: 2,000, hereinafter abbreviated as "Bio PEs (1)"), and 40 parts by mass of an amorphous polyester polyol (reaction product of phthalic anhydride, diethylene glycol, and neopentyl glycol, number average molecular weight: 1,000, hereinafter abbreviated as "amorphous PEs") were charged, dried under a reduced pressure at 110°C, and dehydrated until the water content was 0.05% by mass or less. Next, after cooling to 60°C, 27 parts by mass of diphenylmethane diisocyanate (hereinafter abbreviated as "MDI") was added, the temperature was raised to 110°C, and the reaction was performed for 2 hours until the isocyanate group content was constant, thereby obtaining a moisture-curable polyurethane hot-melt resin composition.

[Example 2]

A moisture-curable polyurethane hot-melt resin composition was obtained in the same manner as in Example 1, except that a biomass polyester polyol (reaction product of sebacic acid ("sebacic acid" manufactured by HOKOKU CORPORATION) and 1,4-butanediol ("Bio-BDO" manufactured by Jenomatica), number average molecular weight: 2,000, hereinafter abbreviated as "Bio PEs (2)") was used instead of the Bio PEs (1).

[Example 3]

A moisture-curable polyurethane hot-melt resin composition was obtained in the same manner as in Example 1, except that a biomass polyester polyol (reaction product of succinic acid ("succinic acid" manufactured by SUCCINITY) and 1,3-propanediol ("SUSTERRA propanediol" manufactured by DuPont), number average molecular weight: 2,000, hereinafter abbreviated as "Bio PEs (3)") was used instead of the Bio PEs (1).

[Comparative Example 1]

To a four-necked flask equipped with a thermometer, a stirrer, an inert gas inlet, and a reflux condenser, 40 parts by mass of a polyester polyol (reaction product of phthalic anhydride and 1,6-hexanediol (both petroleum-based), number average molecular weight: 2,000, hereinafter abbreviated as "RPEs (1)") and 40 parts by mass of the amorphous PEs were charged, dried under a reduced pressure at 110°C, and dehydrated until the water content was 0.05% by mass or less. Next, after cooling to 60°C, 27 parts by mass of MDI was added, the temperature was raised to 110°C, and the reaction was performed for 2 hours until the isocyanate group content was constant, thereby obtaining a moisture-curable polyurethane hot-melt resin composition.

[Method for Measuring Number Average Molecular Weight]

The number average molecular weight of each polyol used in Examples and Comparative Examples is a value measured by the gel permeation chromatography (GPC) method under the following conditions.

Measurement device: high-speed GPC device ("HLC-8220GPC" manufactured by Tosoh Corporation)
Column: the following columns manufactured by Tosoh Corporation were used in the manner of being connected in series.
"TSKgel G5000" (7.8 mm I.D. $\times$ 30 cm) $\times$ 1
"TSKgel G4000" (7.8 mm I.D. $\times$ 30 cm) $\times$ 1
"TSKgel G3000" (7.8 mm I.D. $\times$ 30 cm) $\times$ 1
"TSKgel G2000" (7.8 mm I.D. $\times$ 30 cm) $\times$ 1
Detector: RI (differential refractometer)
Column temperature: 40°C
Eluent: tetrahydrofuran (THF)
Flow rate: 1.0 mL/min
Injection amount: 100 $\mu$L (tetrahydrofuran solution having a sample concentration of 0.4% by mass)
Standard sample: a calibration curve was created using the following standard polystyrenes.

(Standard Polystyrene)

"TSKgel standard polystyrene A-500" manufactured by Tosoh Corporation
"TSKgel standard polystyrene A-1000" manufactured by Tosoh Corporation
"TSKgel standard polystyrene A-2500" manufactured by Tosoh Corporation
"TSKgel standard polystyrene A-5000" manufactured by Tosoh Corporation
"TSKgel standard polystyrene F-1" manufactured by Tosoh Corporation
"TSKgel standard polystyrene F-2" manufactured by Tosoh Corporation
"TSKgel standard polystyrene F-4" manufactured by Tosoh Corporation
"TSKgel standard polystyrene F-10" manufactured by Tosoh Corporation
"TSKgel standard polystyrene F-20" manufactured by Tosoh Corporation
"TSKgel standard polystyrene F-40" manufactured by Tosoh Corporation
"TSKgel standard polystyrene F-80" manufactured by Tosoh Corporation
"TSKgel standard polystyrene F-128" manufactured by Tosoh Corporation
"TSKgel standard polystyrene F-288" manufactured by Tosoh Corporation
"TSKgel standard polystyrene F-550" manufactured by Tosoh Corporation

[Method of Evaluating Adhesiveness to Fabric]

Each of the moisture-curable polyurethane hot-melt resin compositions obtained in Examples and Comparative Examples was melted at 100°C, and then applied onto a moisture-permeable film ("VENTEX" manufactured by Kahei Co., Ltd.) using a gravure roll coater (40 L/inch, 130 depth, application amount; 10 g/m$^2$), bonded to the following three types of fabrics, and allowed to stand in an atmosphere at a temperature of 23°C and a humidity of 50% for 2 days to obtain a work cloth.

Fabric (1): non-water repellent cloth (surface free energy: more than 50 mJ/m$^2$)
Fabric (2): water repellent cloth (surface free energy: in the range of 10 mJ/m$^2$ to 50 mJ/m$^2$)
Fabric (3): super water repellent cloth (surface free energy: less than 10 mJ/m$^2$)

The resulting work cloth was cut to a width of 1 inch, and peel strength (N/inch) between the moisture-permeable film and the fabric was measured using "Autograph AG-1" manufactured by Shimadzu Corporation.

[Method of Evaluating of Film Strength]

Each of the moisture-curable polyurethane hot-melt resin compositions obtained in Examples and Comparative Examples was melted at 100°C, and then applied to a thickness of 100 $\mu$m using a roll coater, and allowed to stand in an atmosphere at a temperature of 23°C and a humidity of 50% for 2 days to obtain a film. The obtained film was cut into a strip shape having a width of 5 mm and a length of 50 mm, and was pulled in an atmosphere at a temperature of 23°C under the condition of a crosshead speed of 10 mm/sec using a tensile tester "Autograph AG-I" (manufactured by Shimadzu Corporation), and the tensile strength (MPa) was measured and evaluated as follows.

"T": the tensile strength is 20 MPa or more.

"F": the tensile strength is less than 20 MPa.

[Table 1]

| Table | | Example 1 | Example 2 | Example 3 | Comparative Example 1 |
|---|---|---|---|---|---|
| Polyester polyol (a1) | | Bio PEs (1) | Bio PEs (2) | Bio PEs (3) | |
| | Polybasic acid (x) | Sebacic acid | Sebacic acid | Succinic acid | |
| | Glycol (y) | 13PD | 14BD | 13PD | |
| Polyester polyol (a2) | | Amorphous PEs | Amorphous PEs | Amorphous PEs | Amorphous PEs |
| Another polyester polyol | | | | | RPEs(1) |
| Polyisocyanate (B) | | MDI | MDI | MDI | MDI |
| Biomass degree (%) | | 40 | 40 | 40 | 0 |
| Evaluation on adhesiveness (N/inch) to fabric | Fabric (1) | 8 | 8 | 8 | 8 |
| | Fabric (2) | 8 | 7 | 7 | 5 |
| | Fabric (3) | 8 | 5 | 7 | 1 |
| Evaluation on film strength | | T | T | T | T |

The abbreviations in Table 1 are as follows.

- "13PD"; 1,3-propanediol ("SUSTERRA propanediol" manufactured by DuPont)

- "14BD"; 1,4-butanediol ("Bio-BDO" manufactured by Jenomatica)

It was found that the moisture-curable polyurethane hot-melt resin composition according to the invention had a high biomass degree, excellent film strength, and excellent adhesiveness to the fabric. In particular, it was found that excellent adhesiveness was exhibited even with respect to the water-repellent fabric and the super water-repellent fabric.

On the other hand, Comparative Example 1 was an aspect in which the biomass raw material was not used, and the adhesiveness to the super water-repellent fabric was bad.

## Claims

1. A moisture-curable polyurethane hot-melt resin composition comprising:
   a urethane prepolymer (i) having an isocyanate group, which is a reaction product of a polyol (A) and a polyisocyanate (B), the polyol (A) containing a polyester polyol (a1) containing, as raw materials, a biomass-derived polybasic acid (x) and a biomass-derived glycol (y), and another polyester polyol (a2).

2. The moisture-curable polyurethane hot-melt resin composition according to claim 1, wherein the biomass-derived polybasic acid (x) is sebacic acid and/or succinic acid.

3. The moisture-curable polyurethane hot-melt resin composition according to claim 1 or 2, wherein the biomass-derived glycol (y) is 1,3-propanediol and/or 1,4-butanediol.

4. The moisture-curable polyurethane hot-melt resin composition according to any one of claims 1 to 3, wherein the another polyester polyol (a2) is an amorphous polyester polyol.

5. The moisture-curable polyurethane hot-melt resin composition according to any one of claims 1 to 4, which has a biomass degree of 40% or more.

6. An adhesive comprising:
   the moisture-curable polyurethane hot-melt resin composition according to any one of claims 1 to 5.

7. A laminate comprising:
   at least a fabric (i) and a cured product of the moisture-curable polyurethane hot-melt resin composition according to any one of claims 1 to 5.

8. The laminate according to claim 7, wherein the fabric (i) is a water-repellent fabric.

## INTERNATIONAL SEARCH REPORT

| | International application No. |
|---|---|
| | PCT/JP2020/033356 |

**A. CLASSIFICATION OF SUBJECT MATTER**
C08G 18/30(2006.01)i; B32B 27/40(2006.01)i; C08G 18/10(2006.01)i; C08G 18/42(2006.01)i; C09J 175/06(2006.01)i
FI: C08G18/30 070; C08G18/10; C08G18/42 002; B32B27/40; C09J175/06
According to International Patent Classification (IPC) or to both national classification and IPC

**B. FIELDS SEARCHED**

Minimum documentation searched (classification system followed by classification symbols)
C08G18/00-18/87;C08G71/00-71/04; B32B1/00-43/00; C09J1/00-201/10

Documentation searched other than minimum documentation to the extent that such documents are included in the fields searched
| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2015-038162 A (NIPPON BEE CHEMICAL CO., LTD.) 26 February 2015 (2015-02-26) claims, paragraphs [0025], [0047], [0077], [0139]-[0140], examples | 1-8 |
| A | WO 2018/173768 A1 (DIC CORP.) 27 September 2018 (2018-09-27) claims | 7-8 |
| A | JP 10-237412 A (BANDO CHEMICAL INDUSTRIES, LTD.) 08 September 1998 (1998-09-08) claims | 7-8 |
| X | WO 2017/111033 A1 (MITSUBISHI CHEMICAL CORP.) 29 June 2017 (2017-06-29) claims, paragraphs [0015]-[0017], [0029], [0059]-[0060], [0111]-[0112], examples | 1-8 |
| X | JP 2011-225851 A (MITSUBISHI CHEMICAL CORP.) 10 November 2011 (2011-11-10) claims, paragraphs [0010], [0239], [0284]-[0287], [0444], [0446], examples | 1-8 |

☒ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 November 2020 (06.11.2020) | 17 November 2020 (17.11.2020) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2020/033356

C (Continuation). DOCUMENTS CONSIDERED TO BE RELEVANT

| Category* | Citation of document, with indication, where appropriate, of the relevant passages | Relevant to claim No. |
|---|---|---|
| A | JP 2018-095831 A (SAKATA INX CORP.) 21 June 2018 (2018-06-21) entire text | 1-8 |
| A | JP 2018-062642 A (TOKYO PRINTING INK MFG. CO., LTD.) 19 April 2018 (2018-04-19) entire text | 1-8 |
| A | JP 2011-225863 A (DAINICHISEIKA COLOR & CHEMICALS MFG. CO., LTD.) 10 November 2011 (2011-11-10) entire text | 1-8 |
| A | JP 2009-155645 A (TORAY COATEX CO., LTD.) 16 July 2009 (2009-07-16) entire text | 1-8 |

Form PCT/ISA/210 (continuation of second sheet) (January 2015)

**INTERNATIONAL SEARCH REPORT**
Information on patent family members

International application No.

PCT/JP2020/033356

| Patent Documents referred in the Report | Publication Date | Patent Family | Publication Date |
|---|---|---|---|
| JP 2015-038162 A | 26 Feb. 2015 | US 2011/0257273 A1 claims, paragraphs [0034], [0059], [0090], [0158]-[0159], examples CN 102234369 A | |
| WO 2018/173768 A1 | 27 Sep. 2018 | KR 10-2019-0097288 A CN 110418809 A TW 201841962 A | |
| JP 10-237412 A | 08 Sep. 1998 | (Family: none) | |
| WO 2017/111033 A1 | 29 Jun. 2017 | US 2018/0037692 A1 claims, paragraphs [0028]-[0032], [0049], [0090]-[0091], [0173]-[0174], examples EP 3305828 A1 | |
| JP 2011-225851 A | 10 Nov. 2011 | US 2013/0035448 A1 claims, paragraphs [0010], [0242], [0287]-[0290], [0447], [0449], examples EP 2554559 A1 CN 102822223 A KR 10-2013-0009819 A | |
| JP 2018-095831 A | 21 Jun. 2018 | US 2020/0062976 A1 entire text EP 3556818 A1 | |
| JP 2018-062642 A | 19 Apr. 2018 | JP 2018-131624 A entire text | |
| JP 2011-225863 A | 10 Nov. 2011 | JP 2014-37552 A entire text | |
| JP 2009-155645 A | 16 Jul. 2009 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017202608 A